# EUROPÄISCHE PATENTSCHRIFT

(11) **EP 1 407 851 B1**
(45) Veröffentlichungstag und Bekanntmachung des Hinweises auf die Patenterteilung: **11.06.2008**
(21) Anmeldenummer: 03020236.0
(22) Anmeldetag: 06.09.2003
(51) Int. Cl.: B23K 26/03, B23K 26/36, B23K 26/40

(54) **Verfahren und Einrichtung zur gesteuerten Bearbeitung von Werkstücken mittels Laserabtragung**
Method and device for removing material to workpieces with a laser
Méthode et dispositif d'enlèvement de matière à des pièces au moyen d'un laser

(30) Priorität: 12.10.2002 DE 10247705
(43) Veröffentlichungstag der Anmeldung: 14.04.2004
(73) Patentinhaber: Volkswagen Aktiengesellschaft, 38436 Wolfsburg (DE)
(72) Erfinder: Bach, Eric-Magnus, 38102 Braunschweig (DE); Schmidt, Michael, Dr., 91054 Erlangen (DE); Klausecker, Roland, 91052 Erlangen (DE); Esser, Gerd, 91056 Erlangen (DE); Otto, Andreas, Dr., 90537 Feucht (DE)
(74) Vertreter: Pohlmann, Bernd Michael

(56) Entgegenhaltungen:
- EP-A- 0 711 627
- DE-A- 19 945 022
- US-A- 3 700 850
- US-A- 5 045 669
- US-A- 5 674 415
- PATENT ABSTRACTS OF JAPAN Bd. 0131, Nr. 78 (M-819), 26. April 1989 (1989-04-26) & JP 1 011087 A (ORIGIN ELECTRIC CO LTD), 13. Januar 1989 (1989-01-13)
- PATENT ABSTRACTS OF JAPAN Bd. 0090, Nr. 94 (M-374), 24. April 1985 (1985-04-24) & JP 59 220294 A (INOUE JAPAX KENKYUSHO KK), 11. Dezember 1984 (1984-12-11)
- PATENT ABSTRACTS OF JAPAN Bd. 0062, Nr. 53 (M-178), 11. Dezember 1982 (1982-12-11) & JP 57 149087 A (NIPPON DENKI KK), 14. September 1982 (1982-09-14)

## Beschreibung

Die Erfindung betrifft ein Verfahren sowie eine Einrichtung zur gesteuerten Bearbeitung von Werkstücken mittels Laserabtragung, bei welchen die Bearbeitung über Sensoren überwacht wird (siche Ansprüche 1 und), siche EP-A-0 711 627.

Laserabtragungsverfahren sind in der Fertigung beispielsweise von Kunststoffformteilen, wie sie im Automobilbau verwendet werden, vielfach bekannt. Der Laser wird dabei über eine entsprechende Kontur oder über eine Fläche gesteuert und die dort lokal abgescannten Bereiche sollen aufgrund von plötzlicher Hitzeentwicklung abgetragen werden. Der Laser scannt dabei zeilenweise die entsprechenden Konturen ab und die Wiederholung des Vorganges ist eine Frage der gewünschten Abtragungstiefe. Hier sind aus dem Stand der Technik einige Verfahren bekannt.

Aus der DE 199 45 022 A1 ist ein Laserbearbeitungssystem und ein Laserbearbeitungsverfahren bekannt, welches insbesondere für Airbagvorrichtungsteile geschaffen worden ist. Dabei sind Mittel vorhanden, die eine Restmaterialstärke von der Bearbeitungsstelle her ermitteln. Hierbei werden bestimmte Konturen, die bei den Airbagteilen im wesentlichen Sollbruchstellen sind, mit dem Laser gescannt und das Material dort in Form tiefer, schmaler Furchen abgetragen.

Aus der EP 0 451 164 B1 ist ein Verfahren und eine Vorrichtung zum Bearbeiten von Werkstücken mit Laserstrahlung bekannt, bei welchen ein Strahlungsdetektor verwendet wird. Der Strahlungsdetektor ist im Bereich der Bearbeitungsstelle angeordnet und erfaßt die dort auftretende Wärmestrahlung. Die dabei gemessenen Temperaturwerte sollen im Bereich der Verdampfungs- und Schmelztemperatur des Materials, welches abgetragen wird, liegen. Hierbei steht lediglich die Überwachung der Temperatur als Größe für eine Nachregelung der Laserleistung im Vordergrund.

Aus der EP 0 827 802 B1, die als nächst liegenden Stand der Technik angesehen wird, ist ebenfalls ein Laserabtragungsverfahren zum Herstellen von Sollbruchstellen unter Verwendung eines Kontaktsensors oder dünnen Folienbereichen bekannt.

Aus der DE 197 55 738 A1 ist ein Verfahren zur trennenden und/oder abtragenden Bearbeitung von vorgefertigten Kunststofffolien bekannt. Auch hierbei wird ein Laserstrahlbündel verwendet, welches entlang einer vorgegebenen Kontur geführt wird und diese dann durch Laserabtragung, d. h. durch Verdampfung des Materiales auf gezielte Weise verdünnt.

Die US-A 5 045 669 offenbart einen akustischen Sensor, weiche durch Laserbearbeitung eines Werkstückes' induzierte Schwingungen erfasst Dieser Sensor kann beispielsweise als Mikrofon ausgeführt sein, welches die induzierten Schwingungen mittels Kontakt zum Werkstück oder über den induzierten Luftschall erfasst. Weiterhin werden als Sensoren zur Erfassung dieser induzierten Schwingung Beschleunigungssensoren und Mittel zum Erfassen akustischer Emissionen und akustischer Schwingungen genannt.

Die GB-A- 2 200 990 beschreibt ein Verfahren und eine Vorrichtung zum Schweißen, bei der das flüssige Schweißbad überwacht wird. Durch Anregung wird das flüssige. Schweißbad zum Schwingen gebracht. Hierdurch tritt eine Intensitätsänderung des Lichtes der Schweißfakel oder eines auf das Schweißbad gerichteten Laserstrahles auf. Diese intensitätsänderung wird mittels eines optischen Lichtleiters und einer Fotodiode gemessen. Das Messsignal (Intensitätsänderung) entspricht der Schwingungsfrequenz des Schweißbades.

Aus der US-A- 4 768 381 ist bereits ein Vibrometer zur Messung dreidimensionaler Vibrationen eines Objekts bekannt, mit denen sowohl Bewegungen des Messobjekts in Strahlrichtung als auch senkrecht dazu erfasst werden können. Das Vibrometer beinhaltet ein reflektierendes Element mit einer konischen konvexen Reflektionsoberfläche, das auf dem Objekt für die Messung angebracht ist. Das bekannte Vibrometer soll die Verwendung von zwei oder drei Vibrometer ersetzen.

Alles in allem existieren somit für das Abtragen von Materialien mit Laserstrahlung auf eine vorgegebene Resttiefe optische Verfahren zur Messung der Eindringtiefe bzw. der Restmaterialdicke des bearbeiteten Werkstückes. Hierbei ergibt sich natürlich, dass diese nur auf solche Materialien anwendbar sind, die entweder einen speziellen Aufbau haben, um einen gewissen Anteil an transmittiertem Licht zu messen. Dies ist nicht bei allen Materialien gegeben.

Auch die Einbringung von Sollbruchstellen in Kunststoffbauteilen mittels Laser beruht auf der Detektion von transmittierter Strahlung. Die Strahlungsmenge je Laserimpuls wird mit einem Sensor gemessen und je nach gewünschter Bearbeitung zur Regelung des Lasers verwendet, wie oben beschrieben. Da diese Verfahren transmissionsabhängig sind, lässt sich die gewünschte Bearbeitung bei einem nicht oder nur wenig transparenten Werkstoff nur eingeschränkt regeln.

Es ist weiterhin bekannt, bei der Laserbearbeitung induzierten Körperschall mittels akustischen Sensoren zu ermitteln, die den Körperschall aufnehmen.

Der Erfindung liegt somit die Aufgabe zugrunde, das Laserabtragungsverfahren an sowie eine entsprechende Einrichtung hierzu dahingehend zu verbessern, dass eine zuverlässige und materialunabhängigere Detektion des Abtragungsprozesses quasi in situ erfolgen kann.

Das erfindungsgemäß Verfahren ist durch die Merkmale des Patentanspruches 1 definiert.

Weitere vorteilhafte Ausgestaltungen des erfindungsgemäßen Verfahrens sind in den abhängigen Ansprüchen 2-8 angegeben.

Die erfindungsgemäße Einrichtung ist durch die Merkmale des Patentanspruches 9 definiert.

Weitere vorteilhafte Ausgestaltungen der erfindungsgemäßen Einrichtungen sind in den abhängigen Ansprüchen 10-11 angegeben.

Kern der verfahrensgemäßen Erfindung ist hierbei, dass die über die Laserabtragung entstehenden Phononen berührungslos über ein Laservibrometer detektiert werden, so dass über die Auswertung von Energie und/oder Amplitude und/oder Phasenlage auf den aktuellen Bearbeitungsstand geschlossen wird bzw. werden kann.

Da dieses Verfahren nunmehr unabhängig ist von ansonsten im Stand der Technik optischen Detektionsverfahren, indem hierbei nur Phononen gemessen werden, kann das Verfahren materialunabhängig und auch unabhängig von den jeweils zu bearbeitenden Konturen optimal eingesetzt werden. Es lässt sich somit sagen, dass in gewisser Weise jedes Material im Hinblick auf seine lokal erzeugbaren Phononen "transparent" bzw. "transmittierend" ist.

Dabei wird der Effekt genutzt, dass ein material- und prozessspezifischer Zusammenhang zwischen den beim Abtragen mit dem Laser induzierten Impulsen und der Ausbreitung von Körperschall bzw. der Emmission von akustischen Schallwellen besteht. Während des Prozesses wird über eine sehr hohe lokale Leistungsdichte das Material an der entsprechenden Stelle verdampft. Durch den sehr schnell expandierten Dampf, oder ggf. das erzeugte Plasma entsteht eine Druckwelle im Material, die zur Ausbildung von Körperschall führt. Je nach Struktur des bearbeiteten Werkstoffes erfolgt sowohl die Materialverdampfung, als auch die Ausbreitung des Körperschalls unterschiedlich. Der Körperschall und die explosionsartige Verdampfung führen zur Emmission von longitudinalen akustischen Wellen, sog. Stoßwellen.

Zur Erfassung von Informationen über den Prozesszustand, speziell die Restmaterialdicke, wird das veränderte lokale Schwingungsverhalten des Werkstückes an der Bearbeitungsstelle berührungslos über ein Laservibrometer ausgewertet.

Neben der Restmaterialdicke können in Schichtsystemen ebenfalls Informationen zur gerade bearbeiteten Schicht entnommen werden. Ein Abtragen des Materials bis zu einer messbaren optischen Transmission ist nicht notwendig. In weiterer vorteilhafter Ausgestaltung ist daher angegeben, dass über die Detektion von Körperschall mittels Laservibrometer im Werkstück automatisch der aktuelle Bearbeitungszustand ermittelt wird.

Weiterhin ist erfindungsgemäß ausgestaltet, dass auf diese Weise Konturen, Strukturen und Kontur- und Strukturtiefen automatisch ermittelt werden können und daraufhin ggf. die Laserleistung und der Bearbeitungszustand hin optimiert werden können.

In weiterer vorteilhafter Ausgestaltung ist angegeben, dass auf die ermittelten Größen und Werte und Parameter der Bearbeitungslaser in seiner Leistung und in der Führung ggf. auch im Positionieren des Fokus einstellbar ist.

In weiterer vorteilhafter Ausgestaltung ist darüber hinausgehend angegeben, dass auf diese Weise eine geeignete Steuerung der Materialdicke bei Abtragung bzw. der Restmaterialdicke, wie oben bereits ausgeführt, erfolgen kann.

Ebenso vorteilhaft ist es, Schichtübergänge bei Schichtsystemen, also bei geschichteten Werkstücken unterschiedlicher Schichtabfolgen oder unterschiedlicher Materialien zu erkennen. Hier findet das erfindungsgemäße Verfahren eine vorteilhafte Einsatzmöglichkeit bei Verbundwerkstoffen.

In weiterer vorteilhafter Ausgestaltung ist damit möglich, eine Einbringung von Vertiefungskonturen beliebiger Form auf diese Weise optimal überwachen und steuern zu können.

Das Verfahren ist auf Kunststoffwerkstücke im Kraftfahrzeugbau vorteilhaft anwendbar.

Mit diesem Verfahren können Sollbruchkonturen beispielsweise bei Airbagabdeckungen effizient gefertigt werden.

Im Hinblick auf eine Einrichtung zur gesteuerten Bearbeitung von Werkstücken mittels Laserabtragung, mit gesteuertem Laser und Sensoren, besteht der Kern der Erfindung nunmehr darin, dass die Sensoren Laservibrometer sind. Auf diese Weise ist es nunmehr möglich, das Verfahren auch physisch umzusetzen.

In weiterer vorteilhafter Ausgestaltung der erfindungsgemäßen Einrichtung ist eine Auswerteeinheit vorgesehen, die mit dem Laservibrometer direkt korrespondiert und die Phononen entsprechend auswertet. Reflexionen, Laufzeiten, Amplituden und Phasenlagen der Phononen tragen somit physikalische Informationen über die Konturen, die bearbeitet wurden.

In weiterer vorteilhafter Ausgestaltung ist angegeben, dass eine Ermittlungseinheit für die Lasersteuerparameter mit der Laservibromter logisch verbunden ist, so dass aus der Phononenauswertung, entsprechende Steuerparameter für die Laseransteuerung generiert werden können.

Eine Ansteuerung einer vorprogrammierbaren Kontur über die Lasersteuerung erfolgt.

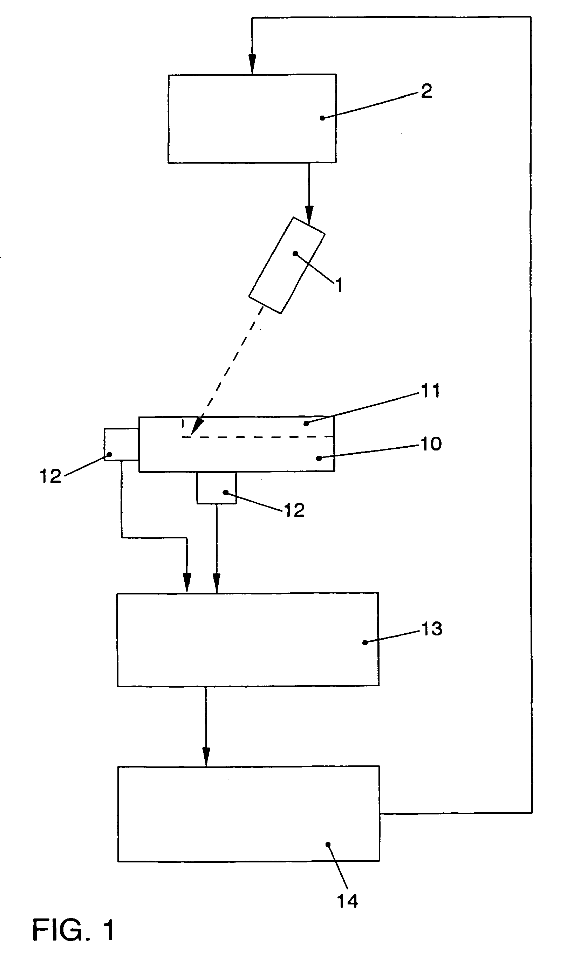

Die Abbildung zeigt eine beispielhafte Einrichtung in ihrem Wirkzusammenhang, jedoch nur in den wichtigsten Elementen und nur schematisch dargestellt.

Kernstück der Laserbearbeitung, also das abtragende Werkzeug selbst ist der Laser 1. Dieser erzeugt einen fokussierten oder fokussierbaren Laserstrahl, der entsprechend auf das Werkstück 10 gerichtet wird. Innerhalb des Werkstückes 10 ist eine Kontur 11 die zu lösende Abtragungsaufgabe. Der Laser scannt nun die Kontur 11 ab, und ersetzt somit beispielsweise herkömmliche Verfahren, bei denen man fräsen würde. Der auftreffende Laserstrahl verdampft lokal das Material in einer nunmehr gezielten und gewünschten Art und Weise. Durch das Scannen wird gezielt das Material derart verdampft, dass sich anschließend die Kontur 11 ergibt.

Der Verdampfungsvorgang als solcher erzeugt im Werkstück 10, wie oben bereits beschrieben, Phononen. Diese Phononen werden durch einen Schwingungsdetektor 12, der überdies auch im Außenraum angeordnet ist, um den in der Umgebungsluft erzeugten Schall von der Bearbeitungsstelle zu detektieren. Der signaltechnische Ausgang des Schwingungsdetektors 12 ist mit einer Auswerteeinheit 13 verbunden. Über diese werden nun das detektierte Phononensignal oder die detektierten Phononensignale ausgewertet. Diese geben eine Information über Laufzeiten, Streuvorgänge im Material etc., und die somit detektierbare Schwingungsinformation der Phononen gibt eine Aussage über die bearbeitete Kontur.

Durch die Hinzunahme des Parameters Zeit können somit auch Abtragungsraten ermittelt werden. All dies geschieht in der Auswerteeinheit 13. Diese ist signaltechnisch wieder an die Ermittlungseinheit 14 für Lasersteuerparameter angekoppelt. Hierbei wird nun aus den in der Auswerteeinheit 13 ermittelten Konturdaten und den Bearbeitungs- und Abtragungsraten ein Satz von Lasersteuerparametem in der Ermittlungseinheit 14 berechnet. Am Ausgang der Ermittlungseinheit 14 für die Laserparameter entstehen nun Steuerparameter, über die die Laseransteuerung 2 angesteuert wird. Die Laseransteuerung 2 umfasst dabei sowohl eine mechanische apparative Steuerung des Lasers, womit das Einstellen einer günstigen Laserposition für den jeweiligen Bearbeitungsstand ermittelt wird, und darüber hinaus auch Energie, Fokus, Ablenkung, womit der Scannvorgang als solches gemeint ist, erzeugt werden. Das heißt, die durch die Laserbearbeitung erzeugten Schwingungen werden im Detektor erfasst und gehen somit als Bearbeitungs- und Steuerparameter wiederum in die Lasersteuerung 2 ein, wobei ein entsprechender Bearbeitungsregelkreis entsteht.

Insgesamt kann die gesamte Anordnung adaptiv ausgelegt sein.

### NEUE BEZUGSZEICHEN

- 1: Laser
- 2: Lasersteuerung
- 10: Werkstück
- 11: Kontur
- 12: Schwingungsdetektor
- 13: Auswerteeinheit
- 14: Ermittlungseinheit für Lasersteuerparameter

## Patentansprüche

1. Verfahren zur gesteuerten und/oder geregelten Bearbeitung von Werkstücken (10) mittels Laserabtrag wobei der Laser Konturen (11) bearbeitet, bei welchen die Bearbeitung über Sensoren überwacht wird, welche über die Laserabtragung entstehenden Schwingungen im Material detektieren, wobei das sich bei der Laserabtragung verändernde lokale Schwingungsverhalten des Werkstückes (10) an der Bearbeitungsstelle berührungslos über ein Laservibrometer aufgenommen wird und über die Auswertung des Detektorsignals mittels einer Korrelation zu den Laserparametern wie Energie und/oder Amplitude und/oder Phasenlage auf den aktuellen Bearbeitungsstand geschlossen wird.

2. Verfahren nach Anspruch 1, **dadurch gekennzeichnet, dass** über die Detektion der im Werkstück (10) entstehenden Signale automatisch der aktuelle Bearbeitungszustand ermittelt wird.

3. Verfahren nach einem der vorhergehenden Ansprüche, **dadurch gekennzeichnet, dass** Konturen (11), Strukturen- und Konturentiefe automatisch ermittelt werden.

4. Verfahren nach einem der vorhergehenden Ansprüche, **dadurch gekennzeichnet, dass** darauf die Parameter des Bearbeitungslasers und die Strahlführung und - formung eingesteltt werden.

5. Verfahren nach einem der vorhergehenden Ansprüche, **dadurch gekennzeichnet, dass** auf diese Weise die Steuerung der Materialdicke bei Abtragung am Werkstück (10) ermöglicht wird.

6. Verfahren nach einem der vorhergehenden Ansprüche, **dadurch gekennzeichnet, dass** die Erfassung von Schichtübergängen bei Schichtsystemen erfolgt.

7. Verfahren nach einem der vorhergehenden Ansprüche, **dadurch gekennzeichnet, dass** auf diese Weise die Einbringung von Vertiefungskonturen erfolgt.

8. Verfahren nach einem der vorhergehenden Ansprüche, **dadurch gekennzeichnet, dass** Kunststoffwerkstücke im Kfz-Bau oder Sollbruchstellenkonturen in Werkstücken auf diese Weise hergestellt werden.

9. Einrichtung zum gesteuerten Bearbeiten von Werkstücken mittels Laserabtragung, mit gesteuertem Laser (1, 2) und mit Sensoren, welche über die Laserabtragung entstehenden Schwingungen im Material detektieren, wobei als Schwingungsdetektor für die Aufnahme des veränderndeten lokalen Schwingungsverhalten des Werkstückes an der Bearbeitungsstelle mindestens ein Laservibrometer an der Einrichtung angeordnet ist und Mittel (13, 14) vorgesehen sind um eine Ansteuerung vorprogrammierbarer Konturen (11) in beliebigen Werkstücken (10) vorzunehmen, und den Vorgang in Echtzeit durchzuführen, wobei über die Auswertung des Detektorsignals mittels einer Korrelation zu den Laserparametern wie Energie und/oder Amplitude und/oder Phasenlage auf den aktuellen Bearbeitungsstand schließbar ist.

10. Einrichtung nach Anspruch 8, **dadurch gekennzeichnet, dass** eine Auswerteeinheit (13) zur Auswertung der Detektorsignale vorgesehen ist.

11. Einrichtung nach einem der vorhergehenden Ansprüchen 8 oder 9, **dadurch gekennzeichnet, dass** eine Ermittlungseinheit (14) für die Berechnung von Laserparametern auf Basis der Schwingungsauswerteparamter vorgesehen ist.

## Claims

1. Method for the controlled and/or regulated machining of workpieces (10) by means of laser ablation, the laser machining contours (11) and the machining being monitored by means of sensors which detect vibrations in the material produced by the laser ablation, the local vibrational behaviour of the workpiece (10) at the machining site, which changes during the laser ablation, being contactlessly recorded by means of a laser vibrometer and the current state of machining being inferred by evaluating the detector signal by means of a correlation with the laser parameters such as energy and/or amplitude and/or phase position.

2. Method according to Claim 1, **characterized in that** the current state of machining is automatically determined by detecting the signals produced in the workpiece (10).

3. Method according to one of the preceding claims, **characterized in that** contours (11) and the depth of structures and contours are automatically determined.

4. Method according to one of the preceding claims, **characterized in that** on this basis the parameters of the machining laser and the guidance and shaping of the beam are set.

5. Method according to one of the preceding claims, **characterized in that** controlling the material thickness during ablation on the workpiece (10) is made possible in this way.

6. Method according to one of the preceding claims, **characterized in that**, in the case of layered systems, transitions between layers are sensed.

7. Method according to one of the preceding claims, **characterized in that** the introduction of depression contours takes place in this way.

8. Method according to one of the preceding claims, **characterized in that** plastic workpieces in motor vehicle construction or contours of predetermined breaking points in workpieces are produced in this way.

9. Device for the controlled machining of workpieces by means of laser ablation, with a controlled laser (1, 2) and with sensors which detect vibrations in the material produced by the laser ablation, at least one laser vibrometer being arranged on the device as a vibration detector for recording the changed local vibrational behaviour of the workpiece at the machining site and means (13, 14) being provided for performing an activation of pre-programmable contours (11) in any desired workpieces (10) and for carrying out the operation in real time, the current state of machining being inferred by evaluating the detector signal by means of a correlation with the laser parameters such as energy and/or amplitude and/or phase position.

10. Device according to Claim 8, **characterized in that** an evaluation unit (13) is provided for evaluating the detector signals.

11. Device according to either of the preceding Claims 8 and 9, **characterized in that** a determining unit (14) is provided for calculating laser parameters on the basis of the vibration evaluation parameters.

## Revendications

1. Procédé d'usinage contrôlé et/ou régulé de pièces (10) par enlèvement de matière au laser, le laser usinant des contours (11), dans lequel l'usinage est surveillé par des détecteurs qui détectent les vibrations provoquées dans le matériau par l'enlèvement de matière au laser, les variations du comportement local de vibration de la pièce (10) à l'emplacement de l'usinage étant enregistrées sans contact à l'aide d'un vibromètre laser et des conclusions sur l'état effectif de l'usinage étant tirées de l'évaluation du signal de détection au moyen d'une corrélation avec les paramètres du laser, par exemple l'énergie, l'amplitude et/ou la phase.

2. Procédé selon la revendication 1, **caractérisé en ce que** l'état effectif du traitement est déterminé automatiquement par l'intermédiaire de la détection des signaux produits par la pièce (10).

3. Procédé selon l'une des revendications précédentes, **caractérisé en ce que** les contours (11), les structures et la profondeur des contours sont déterminés automatiquement.

4. Procédé selon l'une des revendications précédentes, **caractérisé en ce que** les paramètres du laser d'usinage, le guidage et la forme du laser sont ajustés.

5. Procédé selon l'une des revendications précédentes, **caractérisé en ce que** de cette manière, on peut contrôler l'épaisseur du matériau lors de l'enlèvement de matière de la pièce (10).

6. Procédé selon l'une des revendications précédentes, **caractérisé en ce que** l'on effectue une détection des transitions entre couches dans les systèmes stratifiés.

7. Procédé selon l'une des revendications précédentes, **caractérisé en ce que** l'on réalise de cette manière des contours de la profondeur.

8. Procédé selon l'une des revendications précédentes, **caractérisé en ce que** l'on réalise de cette manière des pièces en matière synthétique pour la construction d'automobiles ou des contours de rupture préférentielle dans des pièces.

9. Dispositif d'usinage contrôlé de pièces par enlèvement de matière au laser à l'aide d'un laser contrôlé (1, 2) et de détecteurs qui détectent les vibrations provoquées dans le matériau par l'enlèvement de matière au laser, au moins un vibromètre laser étant disposé sur le dispositif comme détecteur qui enregistre les variations du comportement local de vibration de la pièce (10) à l'emplacement de l'usinage, des moyens (13, 14) étant prévus pour commander des contours préprogrammables (11) dans des pièces (10) quelconques et pour exécuter l'opération en temps réel, des conclusions sur l'état effectif de l'usinage étant tirées de l'évaluation du signal de détection au moyen d'une corrélation avec les paramètres du laser, par exemple l'énergie, l'amplitude et/ou la phase.

10. Dispositif selon la revendication 8, **caractérisé en ce qu'**une unité d'évaluation (13) est prévue pour évaluer les signaux de détection.

11. Dispositif selon l'une des revendications 8 ou 9 qui précèdent, **caractérisé en ce qu'**une unité de détermination (14) est prévue pour le calcul de paramètres du laser sur base des paramètres d'évaluation des vibrations.
